# EUROPÄISCHE PATENTSCHRIFT

(11) **EP 1 412 051 B1**
(45) Veröffentlichungstag und Bekanntmachung des Hinweises auf die Patenterteilung: **27.09.2006**
(21) Anmeldenummer: 02760232.5
(22) Anmeldetag: 09.07.2002
(51) Int. Cl.: B01D 37/02

(54) **VERFAHREN ZUR VERWENDUNG VON FILTERHILFSMITTELN ZUR FILTRATION**
METHOD FOR USING AUXILIARY FILTERING AGENTS FOR FILTRATION PURPOSES
PROCEDE DESTINE A L'UTILISATION D'UN AGENT AUXILIAIRE DE FILTRAGE A DES FINS DE FILTRAGE

(30) Priorität: 18.07.2001 DE 10134861
(43) Veröffentlichungstag der Anmeldung: 28.04.2004
(73) Patentinhaber: PALL CORPORATION, East Hills, New York 11548 (US)
(72) Erfinder: GOTTKEHASKAMP, Ludger, 73571 Göggingen (DE)
(74) Vertreter: Wössner, Gottfried
(86) Internationale Anmeldenummer: PCT/EP2002/007624
(87) Internationale Veröffentlichungsnummer: WO 2003/008067

(56) Entgegenhaltungen:
- DE-A- 19 625 481
- DE-A- 19 833 405

## Beschreibung

Die Erfindung betrifft ein Verfahren zur Filtration von Flüssigkeiten der im Oberbegriff des Anspruchs 1 angegebenen Gattung.

Die Verwendung von Kieselgur, Perliten und/oder Zellstoff als Filterhilfsmittel bei der Filtration von Flüssigkeiten ist bekannt.

Zur Filtration von biologischen Flüssigkeiten, insbesondere von Bier, ist aus der Zeitschrift "Brauwelt", Nr. 17, 1988, Seite 666 ff.; und aus der EP 0 253 233 ein Verfahren bekannt, bei dem regenerierte Kieselgur als Filterhilfsmittel eingesetzt wird. Die Kieselgur wird mit 4%iger bis 5%iger Natronlauge bei einer Temperatur von 80°C regeneriert. Für den Einsatz der regenerierten Kieselgur zur erneuten Filtration werden dieser 10% bis 20% unverbrauchte Kieselgur zugemischt. Beim wiederholten Einsatz regenerierter Kieselgur nach diesem Verfahren ist ein nicht kontrollierbarer Anstieg der Änderung des Differenzdrucks pro Zeiteinheit feststellbar.

Der Erfindung liegt die Aufgabe zugrunde, ein Verfahren zur Filtration von Flüssigkeiten der gattungsgemäßen Art zu schaffen, das den Einsatz regenerierter Filterhilfsmittel ermöglicht.

Diese Aufgabe wird durch ein Verfahren mit den Merkmalen des Anspruchs 1 gelöst.

Regeneriertes Filterhilfsmittel ist im technischen Maßstab nur einsetzbar, wenn das Verfahren kontrollierbar ist. Hierfür ist wesentlich, daß der Anstieg des Differenzdrucks, der die Differenz der Drücke vor und hinter dem Filter bezeichnet, kontrollierbar ist. Wie der Erfinder festgestellt hat, ist der Anstieg des Differenzdrucks pro Zeiteinheit stark abhängig vom Differenzdruck bei Filtrationsbeginn. Wird in der Phase der Voranschwemmung Filterhilfsmittel eingesetzt, das zum überwiegenden Teil aus nicht regeneriertem Filterhilfsmittel besteht, so ist der Differenzdruck bei Filtrationsbeginn niedrig und der Anstieg des Differenzdrucks kontrollierbar. Für die Filtrationsphase kann überwiegend regeneriertes Filterhilfsmittel eingesetzt werden, da dieses lediglich einen geringen Einfluß auf den Anstieg des Differenzdrucks hat. Als optimale Ausführung des Verfahrens wird angesehen, daß für die Anschwemmphase 0% regeneriertes Filterhilfsmittel und für die Filtrationsphase 100% regeneriertes Filterhilfsmittel eingesetzt wird. Das regenerierte Filterhilfsmittel ist mit einem Medium im gesamten pH-Wert-Spektrum behandelt.

Zweckmäßig kommt als Filterhilfsmittel Kieselgur zum Einsatz. Es können jedoch auch Zellstoff und/oder Perlite mit oder ohne Kieselgur als Filterhilfsmittel eingesetzt werden. Es ist vorgesehen, daß das Verfahren eine Regenerationsphase umfaßt, in der das Filterhilfsmittel regeneriert wird, wobei die Regeneration insbesondere im Filter durchgeführt wird. Zweckmäßig umfaßt die Regenerationsphase die Behandlung des Filterhilfsmittels mit Lauge. Als Lauge ist vorzugsweise Natronlauge in einer Konzentration von 0,1% bis 2%, insbesondere von 0,5%, vorgesehen. Bei Konzentrationen unter 0,1% ist eine Lösung der aus dem Filterhilfsmittel zu entfernenden Stoffe in der Natronlauge nicht feststellbar. Bei Konzentrationen der Lauge über 2% wird die Struktur von Kieselgur angegriffen, wodurch die Kieselgur in der Anschwemmschicht geringere Zwischenräume für die Flüssigkeit bildet und damit der Differenzdruck der Anschwemmschicht erheblich ansteigt.

Zweckmäßig wird die Regeneration mit Lauge bei einer Temperatur von 60°C bis 90°C durchgeführt. Weiterhin ist vorgesehen, daß vor der Behandlung mit Lauge der Filterkuchen mit Heißwasser, das insbesondere eine Temperatur von 40°C bis 90°C aufweist, gespült wird. Vorzugsweise wird nach der Behandlung mit Lauge die Lauge mit Heiß- und mit Kaltwasser verdrängt. Zur Neutralisation der Lauge ist vorgesehen, daß das Filterhilfsmittel mit Säure, insbesondere mit Salpetersäure, behandelt wird, wobei dieser Prozeßschritt zweckmäßig nach der Verdrängung der Lauge mit Heiß- und Kaltwasser durchgeführt wird. Für einen nachfolgenden Prozeßschritt ist vorgesehen, daß die Säure mit Kaltwasser verdrängt wird und die Flüssigkeit im Anschluß daran aus dem Filter abgelassen wird. Zweckmäßig wird am Ende der Regenerationsphase das Filterhilfsmittel resuspendiert.

Ein Ausführungsbeispiel der Erfindung wird im folgenden anhand der Zeichnung näher erläutert. Es zeigen:
- Fig. 1: ein Anlagenschema einer Blockanlage zur Durchführung des Verfahrens,
- Fig. 2: ein Schaubild der Abhängigkeit der Druckdifferenz beim Filtrationsende von der Druckdifferenz beim Filtrationsstart.

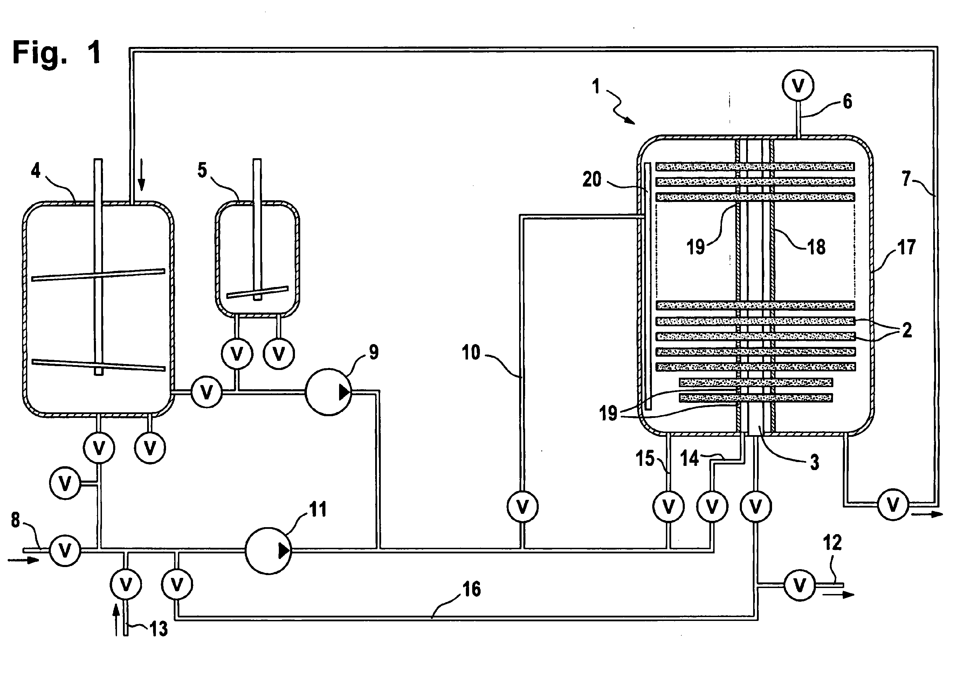

Fig. 1 zeigt ein Anlagenschema einer Blockanlage zur Anschwemmfiltration, in der ein Filter 1 schematisch dargestellt ist, der als Zentrifugal-Horizontalfilter ausgebildet ist. Der Filter 1 umfaßt ein Gehäuse 17 mit darin angeordneten Filterelementen, die aus aufeinander gestapelten scheibenförmigen Filterzellen 2 bestehen und einen mittigen Zentralkanal 3 bilden. Der Zentralkanal 3 liegt stromab des Filterelementpaketes und bildet daher die Filtratseite, während der zwischen den Filterzellen 2 und dem Gehäuse 17 des Filters 1 befindliche Raum die Unfiltratseite bildet. Zur Zufuhr von Unfiltrat besitzt der Filter 1 eine Hohlwelle 18, die koaxial zum Zentralkanal 3 angeordnet ist und diesen umschließt, wobei ein Zwischenraum zur Zufuhr von Unfiltrat gebildet ist. Die Hohlwelle 18 besitzt öffnungen 19, durch die Unfiltrat auf die Unfiltratseite der Filterzellen 2 strömen kann. Anstatt der Filterelemente kann der Filter 1 auch Kerzenfilter als filtrierende Fläche enthalten. Der Filter 1 weist eine Entlüftung 6 auf. Von der Unfiltratseite führt eine Entleerungsleitung 7 zu einem Tank 4, der regenerierte Kieselgur als Filterhilfsmittel enthält. Ein weiterer Tank 5 enthält sogenannte Neugur, das ist Kieselgur, die nicht regeneriert wurde. Als Filterhilfsmittel kann der Kieselgur auch Zellstoff und/oder Perlit zugesetzt sein. Es kann auch ein Filterhilfsmittel zum Einsatz kommen, das nur aus Zellstoff und/oder Perlit besteht. Auch die Zugabe von Silicagel ist möglich, dieses kann jedoch nicht regeneriert werden und muß deshalb regeneriertem Filterhilfsmittel wieder zugesetzt werden.

Vor Beginn der Filtration wird in einer Voranschwemmphase der Filter 1 über eine Auffülleitung 15 mit nicht regeneriertem Filterhilfsmittel, beispielsweise Kieselgur, aus dem Tank 5 angeschwemmt, wobei die Kieselgur insbesondere mit Wasser angeschwemmt wird. Die Voranschwemmmenge ist abhängig vom Filtermaterial und kann beispielsweise etwa 600 g Filterhilfsmittel pro qm Filterfläche betragen. Die Kieselgur wird für die Anschwemmung über die Pumpe 9 und die Zulaufleitung 14 auf der Unfiltratseite an die Filterzellen 2 des Filters 1 angeschwemmt. Während der Voranschwemmung können der Kieselgur bis zu 30% regenerierter Kieselgur aus dem Tank 4 beigemischt werden.

Nach der Voranschwemmung wird Unfiltrat über den Unfiltratzulauf 8 mittels einer Pumpe 11 durch die Zulaufleitung 14 in die Hohlwelle 18 und durch die öffnungen 19 auf die Unfiltratseite des Filters 1 gefördert. Dem Unfiltrat wird über die Pumpe 9 regenerierte Kieselgur aus dem Tank 4 zugesetzt, wobei auch ein Anteil an nicht regenerierter Kieselgur aus dem Tank 5 zugesetzt werden kann. Das Filtrat verläßt nach erfolgter Filtration den Filter 1 über den Filtratablauf 12. Die Filtration wird abgebrochen, wenn die Druckdifferenz am Filter 1 einen vorgegebenen Wert erreicht oder wenn der Filterkuchen, der durch die zugegebenen Filterhilfsmittel gebildet wurde, eine vorgegebene Größe erreicht hat.

Nach Abbruch der Filtration wird das Filterhilfsmittel bzw. die Kieselgur im Filter 1 regeneriert. Hierzu wird noch im Filter 1 befindliches Filtrat über die Filtratrückführung 16 dem Unfiltrat wieder zugeführt, wenn insbesondere nach Abbruch der Filtration die Qualität des Filtrats nicht mehr gewährleistet werden konnte. Das Unfiltrat wird abgeleitet. Anschließend wird der Filter 1 mit Heißwasser, das eine Temperatur von ca. 40°C haben kann, aufgefüllt und der Filterkuchen bei auf bis ca. 90°C ansteigende Temperatur gespült. Nach dem Spülvorgang wird Natronlauge zugegeben, so daß eine etwa 0,5%ige Natronlauge entsteht. Es kann jedoch auch Kalilauge zum Einsatz kommen. Die Laugentemperatur beträgt ca. 60°C bis 90°C. Die Natronlauge wird in einem Kreislauf durch die Kieselgur geführt. Die Behandlung der Kieselgur mit Natronlauge kann dabei beispielsweise ca. 30 Minuten betragen. Im Anschluß daran wird die Lauge mit Heiß- und Kaltwasser verdrängt. Dabei findet eine Abkühlung auf etwa 20°C statt. Im nächsten Verfahrensschritt wird Salpetersäure zugegeben, mit der die Kieselgur beispielsweise 5 Minuten gespült wird. Die Salpetersäure wird dann mit Kaltwasser verdrängt und anschließend die verbleibende Flüssigkeit aus dem Filter 1 abgelassen.

Um den Filterkuchen zu resuspendieren, wird das Filterelementpaket in Rotation versetzt, wobei der Filterkuchen abgeschleudert wird. Der im Unterteil des Filters 1 aufgefangene regenerierte Filterhilfsmittelschlamm wird mit Gas über die Entleerungsleitung 7 in den Tank 4 zurückgedrückt. Während der Filterreinigung können die Filterelemente 2 über die im Filtergehäuse 17 angeordnete Sprühleiste 20 abgesprüht werden. Die Sprühleiste 20 wird von einer Zuführleitung 10 gespeist.

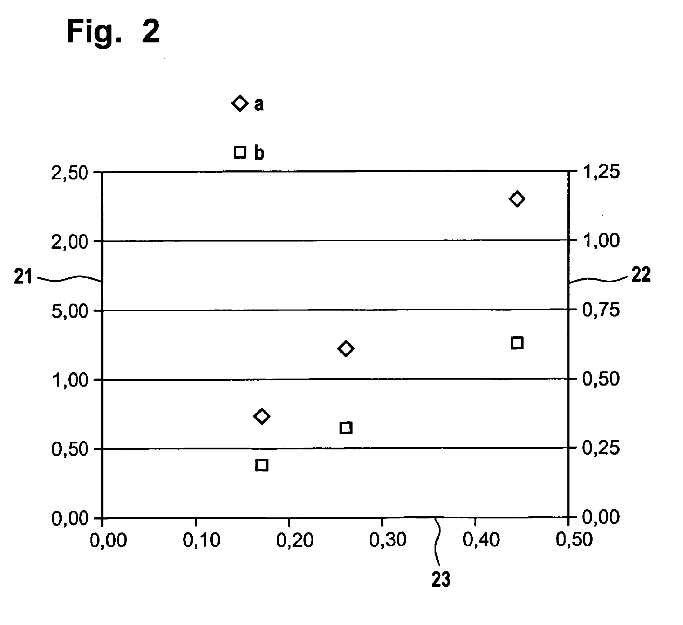

In Fig. 2 ist der Zusammenhang zwischen der Druckdifferenz bei Filtrationsende a bzw. der Änderung der Druckdifferenz pro Zeiteinheit b über der Druckdifferenz bei Filtrationsstart dargestellt. Die Druckdifferenz bei Filtrationsende a ist dabei auf der Achse 21 aufgetragen, die Änderung der Druckdifferenz bei Filtrationsende b auf der Achse 22 und die Druckdifferenz bei Filtrationsstart auf der Achse 23. Aus dem Diagramm wird deutlich, daß die Druckdifferenz bei Filtrationsende a sowie die Änderung der Druckdifferenz pro Zeiteinheit b maßgeblich von der Druckdifferenz beim Filtrationsstart abhängen. Je kleiner die Druckdifferenz beim Filtrationsstart ist, desto geringer ist die Druckdifferenz beim Filtrationsende a sowie die Änderung der Druckdifferenz pro Zeiteinheit b. Die Voranschwemmung mit nicht regeneriertem Filterhilfsmittel ergibt eine geringe Druckdifferenz beim Filtrationsstart und damit eine geringe Druckdifferenz bei Filtrationsende a sowie einen geringen Anstieg der Druckdifferenz pro Zeiteinheit b.

Das Verfahren zur Filtration von Flüssigkeiten kann insbesondere für biologische Flüssigkeiten eingesetzt werden. Wesentlich für die Regeneration des Filterhilfsmittels mit Lauge ist, daß die ausgefilterten Stoffe laugenlöslich sind.

Das Verfahren kann in gängigen Anschwemmfiltern eingesetzt werden. Günstig für den Einsatz des Verfahrens sind Kesselfilter wie Horizontalfilter oder Kerzenfilter, grundsätzlich ist das Verfahren jedoch auch in Rahmenfiltern einsetzbar. Das Verfahren kann auch in Kombination mit einem Verfahren der Stabilisierung von gerbstoff- oder eiweißhaltigen Flüssigkeiten, beispielsweise mit PVPP, oder mit einem Verfahren, bei dem ein vorgefertigter Filterkuchen eingesetzt wird, verwendet werden.

## Patentansprüche

1. Verfahren zur Filtration von Flüssigkeiten, insbesondere von biologischen Flüssigkeiten, bei dem ein Filter (1) in einer Phase der Voranschwemmung mit Filterhilfsmittel angeschwemmt wird und in einer anschließenden Filtrationsphase Unfiltrat unter Zugabe von Filterhilfsmittel filtriert wird, wobei das Filterhilfsmittel in der Phase der Voranschwemmung und der Filtrationsphase einen Filterkuchen auf dem Filter (1) bildet,
**dadurch gekennzeichnet, dass** in der Phase der Voranschwemmung ein erstes Filterhilfsmittel angeschwemmt wird, welches optional einen Anteil an regeneriertem Filterhilfsmittel bis zu 30 Gew.% aufweist, und dass in der Filtrationsphase dem Unfiltrat ein zweites Filterhilfsmittel zugegeben wird, das überwiegend aus regeneriertem Filterhilfsmittel besteht, wobei das regenerierte Filterhilfsmittel mit einem Medium mit einem vorgegebenen pH im Bereich des gesamten pH-Wert-Spektrums behandelt ist.

2. Verfahren nach Anspruch 1,
**dadurch gekennzeichnet, dass** das zweite Filterhilfsmittel nahezu vollständig aus regeneriertem Filterhilfsmittel besteht.

3. Verfahren nach Anspruch 1 oder 2,
**dadurch gekennzeichnet, dass** als Filterhilfsmittel Kieselgur zum Einsatz kommt.

4. Verfahren nach Anspruch 1 oder 2,
**dadurch gekennzeichnet, daß** als Filterhilfsmittel Zellstoff und/oder Perlit mit oder ohne Kieselgur eingesetzt werden.

5. Verfahren nach einem der Ansprüche 1 bis 4,
**dadurch gekennzeichnet, daß** dem Filterhilfsmittel Silicagel und/oder PVPP zugesetzt wird.

6. Verfahren nach einem der Ansprüche 1 bis 5,
**dadurch gekennzeichnet, daß** das Verfahren eine Regenerationsphase umfaßt, in der das Filterhilfsmittel regeneriert wird.

7. Verfahren nach Anspruch 6,
**dadurch gekennzeichnet, daß** die Regeneration im Filter (1) durchgeführt wird.

8. Verfahren nach Anspruch 6 oder 7,
**dadurch gekennzeichnet, daß** die Regenerationsphase die Behandlung des Filterhilfsmittels mit Lauge umfaßt.

9. Verfahren nach Anspruch 8,
**dadurch gekennzeichnet, daß** die Lauge Natronlauge in einer Konzentration von 0,1% bis 2% ist.

10. Verfahren nach einem der Ansprüche 8 oder 9,
**dadurch gekennzeichnet, daß** die Regeneration mit Lauge bei einer Temperatur von 60°C bis 90°C durchgeführt wird.

11. Verfahren nach einem der Ansprüche 8 bis 10,
**dadurch gekennzeichnet, daß** vor der Behandlung mit Lauge der Filterkuchen mit Heißwasser gespült wird.

12. Verfahren nach Anspruch 11,
**dadurch gekennzeichnet, daß** das Heißwasser eine Temperatur von 40°C bis 90°C aufweist.

13. Verfahren nach einem der Ansprüche 8 bis 12,
**dadurch gekennzeichnet, daß** nach der Behandlung mit Lauge die Lauge mit Heiß- und mit Kaltwasser verdrängt wird.

14. Verfahren nach einem der Ansprüche 6 bis 13,
**dadurch gekennzeichnet, daß** das Filterhilfsmittel mit Säure behandelt wird.

15. Verfahren nach Anspruch 14,
**dadurch gekennzeichnet, daß** das Filterhilfsmittel mit Salpetersäure behandelt wird.

16. Verfahren nach Anspruch 14 oder 15,
**dadurch gekennzeichnet, daß** die Behandlung mit Säure nach der Verdrängung der Lauge mit Heiß- und Kaltwasser durchgeführt wird.

17. Verfahren nach einem der Ansprüche 14 bis 16,
**dadurch gekennzeichnet, daß** die Säure mit Kaltwasser verdrängt wird und die Flüssigkeit im Anschluß daran aus dem Filter (1) abgelassen wird.

18. Verfahren nach einem der Ansprüche 6 bis 17,
**dadurch gekennzeichnet, daß** am Ende der Regenerationsphase das Filterhilfsmittel resuspendiert wird.

19. Verfahren nach einem der Ansprüche 1 bis 18,
**dadurch gekennzeichnet, daß** das Verfahren in Kombination mit einem Verfahren zur Stabilisierung von gerbstoffhaltigen Flüssigkeiten, insbesondere mit PVPP, durchgeführt wird.

## Claims

1. Method for filtering liquids, in particular biological liquids, wherein a filter (1) is precoated with filter aid in a precoating phase, and feed is filtered while adding filter aid in a subsequent filtration phase, the filter aid forming a filter cake on the filter (1) in the precoating phase and the filtration phase,
**characterized in that** in the precoating phase a first filter aid optionally containing an amount of regenerated filter aid up to 30% by weight is deposited, and **in that** in the filtration phase a second filter aid consisting predominantly of regenerated filter aid is added to the feed, the regenerated filter aid having been treated with an agent of a predetermined pH in the range of the entire pH spectrum.

2. Method as defined in Claim 1,
**characterized in that** the second filter aid consists nearly entirely of regenerated filter aid.

3. Method as defined in Claim 1 or 2,
**characterized in that** diatomaceous earth is used as filter aid.

4. Method as defined in Claim 1 or 2,
**characterized in that** cellulose and/or perlite without or without diatomaceous earth is used as filter aid.

5. Method as defined in one of Claims 1 to 4,
**characterized in that** silica gel and/or PVPP is added to the filter aid.

6. Method as defined in one of Claims 1 to 5,
**characterized in that** the method includes a regeneration phase in which the filter aid is regenerated.

7. Method as defined in Claim 6,
**characterized in that** the regeneration is carried out in the filter (1).

8. Method as defined in Claim 6 or 7,
**characterized in that** the regeneration phase includes the treatment of the filter aid with an alkali solution.

9. Method as defined in Claim 8,
**characterized in that** the alkali solution is sodium hydroxide solution in a concentration of 0.1% to 2%.

10. Method as defined in Claim 8 or 9,
**characterized in that** the regeneration with alkali solution is carried out at a temperature of from 60°C to 90°C.

11. Method as defined in one of Claims 8 to 10,
**characterized in that** the filter cake is rinsed with hot water before the treatment with alkali solution.

12. Method as defined in Claim 11,
**characterized in that** the hot water has a temperature of from 40°C to 90°C.

13. Method as defined in one of Claims 8 to 12,
**characterized in that** after the treatment with alkali solution the alkali solution is displaced with hot water and with cold water.

14. Method as defined in one of Claims 6 to 13,
**characterized in that** the filter aid is treated with acid.

15. Method as defined in Claim 14,
**characterized in that** the filter aid is treated with nitric aid.

16. Method as defined in Claim 14 or 15,
**characterized in that** the treatment with acid is carried out after displacing the alkali solution with hot water and with cold water.

17. Method as defined in one of Claims 14 to 16,
**characterized in that** the acid is displaced with cold water and the liquid is then allowed to drain from the filter (1).

18. Method as defined in one of Claims 6 to 17,
**characterized in that** the filter aid is resuspended at the end of the regeneration phase.

19. Method as defined in one of Claims 1 to 18,
**characterized in that** the method is carried out in combination with a method for stabilizing tannin-containing liquids, in particular with PVPP.

## Revendications

1. Procédé de filtration de liquides, notamment de liquides biologiques, dans lequel dans une phase de charriage préalable, on soumet un filtre (1) avec un adjuvant de filtration à un charriage préalable et dans une phase de filtration consécutive, on filtre du produit à filtrer en ajoutant un adjuvant de filtration, l'adjuvant de filtration formant un gâteau de filtre sur le filtre (1) dans la phase de charriage préalable et dans la phase de filtration,
**caractérisé en ce que** dans la phase de charriage préalable, on soumet au charriage un premier adjuvant de filtration comportant en option une fraction d'adjuvant de filtration régénéré de jusqu'à 30 %- en poids, et **en ce que** dans la phase de filtration, on ajoute au produit à filtrer un deuxième adjuvant de filtration, qui est composé principalement d'un adjuvant de filtration régénéré, l'adjuvant de filtration régénéré étant traité avec un milieu avec un pH prédéfini, dans la plage du spectre global de la valeur pH.

2. Procédé selon la revendication 1.,
**caractérisé en ce que** le deuxième adjuvant de filtration est presque entièrement composé d'adjuvant de filtration régénéré.

3. Procédé selon la revendication 1 ou 2,
**caractérisé en ce qu'**en tant qu'adjuvant de filtration, on utilise de la terre d'infusoires.

4. Procédé selon la revendication 1 ou 2,
**caractérisé en ce qu'**en tant qu'adjuvant de filtration, on utilise de la cellulose et/ou de la perlite avec ou sans terre d'infusoires.

5. Procédé selon l'une quelconque des revendications 1 à 4,
**caractérisé en ce qu'**on ajoute à l'adjuvant de filtration du gel de silice et/ou du PVPP.

6. Procédé selon l'une quelconque des revendications 1 à 5, **caractérisé en ce que** le procédé comprend une phase de régénération dans laquelle on régénère l'adjuvant de filtration.

7. Procédé selon la revendication 6,
**caractérisé en ce que** la régénération est assurée dans le tiltre (1) .

8. Procédé selon la revendication 6 ou 7,
**caractérisé en ce que** la phase de régénération comprend le traitement de l'adjuvant de filtration avec de la lessive alcaline.

9. Procédé selon la revendication 8,
**caractérisé en ce que** la lessive alcaline se présente dans une concentration de 0,1 % à 2 %.

10. Procédé selon l'une quelconque des revendications 8 ou 9, **caractérisé en ce que** la régénération est assurée avec une lessive alcaline à une température de 60 °C jusqu'à 90 °C.

11. Procédé selon l'une quelconque des revendications 8 à 10, **caractérisé en ce qu'**avant le traitement à la lessive alcaline, on rince le gâteau de filtre à l'eau chaude.

12. Procédé selon la revendication 11,
**caractérisé en ce que** l'eau chaude est à une température de 40 °C à 90 °C.

13. Procédé selon l'une quelconque des revendications 8 à 12,
**caractérisé en ce qu'**après le traitement à la lessive alcaline, on chasse la lessive alcaline à l'eau chaude et à l'eau froide.

14. Procédé selon l'une quelconque des revendications 6 à 13,
**caractérisé en** cc qu'on traite l'adjuvant de filtration avec de l'acide.

15. Procédé selon la revendication 14,
**caractérisé en ce qu'**on traite l'adjuvant de filtration avec de l'acide azotique.

16. Procédé selon la revendication 14 ou 15,
**caractérisé en ce qu'**on assure le traitement à l'acide après avoir chassé la lessive alcaline à l'eau chaude et à l'eau froide.

17. Procédé selon l'une quelconque des revendications 14 à 16,
**caractérisé en ce qu'**on chasse l'acide à l'eau froide et qu'ensuite on laisse s'écouler le liquide du filtre (1)..

18. Procédé selon l'une quelconque des revendications 6 à 17,
**caractérisé en ce qu'**à la fin de la phase de régénération, on remet l'adjuvant de filtration en suspension.

19. Procédé selon l'une quelconque des revendications 1 à 18,
**caractérisé en ce qu'**on assure le procédé en association avec un procédé de stabilisation de liquides contenant des tannins, notamment avec du PVPP.
